# EUROPEAN PATENT APPLICATION

(11) **EP 2 474 925 A1**
(43) Date of publication of application: **11.07.2012**
(21) Application number: 12150238.9
(22) Date of filing: 05.01.2012
(51) Int. Cl.: G06F 17/30

(54) **Media player navigation**

(30) Priority: 05.01.2011 US 201113429919
(71) Applicant: QNX Software Systems Limited, Ottawa, Ontario K2M 1W8 (CA); MacKenzie Stephen James, Ottawa, ON K2M 1W8 (CA); Shaw, Ian, Ottawa, ON K2M 1W8 (CA)
(72) Inventor: MacKenzie, Stephen James, Ottawa, Ontario K2M 1W8 (CA); Shaw, Ian, Ottawa, Ontario K2M 1W8 (CA)
(74) Representative: Patel, Binesh

(57) **Abstract**

A method and apparatus of media player navigation is provided. A media selection context for each of a plurality of media items selected for playback by the media player is stored. A selection context display input is received by the media player and the selection context of the currently playing media item is determined and displayed in the media player.

## Description

### TECHNICAL FIELD

The present disclosure relates to media players and in particular to navigating media libraries during media item playback.

### BACKGROUND

Media players are available on a number of electronic devices and enable the playback of a range of digital media items such as audio and video files accessible from a media library. A user can navigate or browse media libraries either resident on the device or remotely accessible to select media items for playback on the device. Media libraries can be displayed prior to playback but may also be accessible during playback of media items so that another selection may be made. When media items are selected and played, the context of the selection is typically browsed through in a tree structure, or presented as a list of search results limiting a user's ability to access media. User can search or sort for media items in a media library using various category selections or search functions to locate desired media items. However when items are added to a playback queue or a playlist the context under which the item was selected is lost. Accordingly, method and apparatus that enable improved media player navigation remain highly desirable.

### SUMMARY

In accordance with an aspect of the present disclosure there is provided a method of media player navigation, the media player provided in a device, the method comprising storing in memory a selection context in which each of a plurality of media items to be played by the media player was selected for playback; receiving a selection context display input during playback of one of the plurality of media items; determining the media selection context associated with the one of the plurality of media items currently being played in the media player; and displaying the determined media selection context in response to the received selection context display input.

In accordance with another aspect of the present disclosure there is provided an apparatus for executing a media player, the apparatus comprising a display; a processor coupled to the display; a memory containing instructions for navigating and playing media in the media player, the instructions when executed by the processor providing: storing in the memory a selection context in which each of a plurality of media items to be played by the media player was selected for playback; receiving a selection context display input during playback of one of the plurality of media items; determining the media selection context associated with the one of the plurality of media items currently being played in the media player; and displaying on the display the determined media selection context in response to the received selection context display input.

In accordance with yet another aspect of the present disclosure there is provided a computer readable memory containing instructions which when executed by a processor perform storing in memory a selection context in which each of a plurality of media items to be played by the media player was selected for playback; receiving a selection context display input during playback of one of the plurality of media items; determining the media selection context associated with the one of the plurality of media items currently being played in the media player; and displaying the determined media selection context in response to the received selection context display input.

### BRIEF DESCRIPTION OF THE DRAWINGS

Further features and advantages of the present disclosure will become apparent from the following detailed description, taken in combination with the appended drawings, in which:
Figure 1 shows a representation of a media player interface;
Figure 2 shows a representation of a media player interface where media items are being played and a user is browsing a media library;
Figure 3 shows a representation of a media player interface showing a selection context display;
Figure 4 shows a representation of a media player interface providing a selection context display in a first and second portion of the display interface;
Figure 5 shows another representation of a media player interface showing a selection context display;
Figure 6 shows another representation of a media player interface providing a selection context display in a first and second portion of the display interface;
Figure 7 shows a flowchart of a method of media player navigation.
Figure 8 shows a flow chart providing an alternate method of media player navigation;
Figure 9 shows a flow chart providing an alternate method of media player navigation;
Figure 10 shows a flow chart providing an alternate method of media player navigation; and
Figure 11 shows a device for executing a media player.

It will be noted that throughout the appended drawings, like features are identified by like reference numerals.

### DETAILED DESCRIPTION

Although the following description discloses example methods and apparatus including, among other components, software executed on hardware, it should be noted that such methods and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods and apparatus, persons having ordinary skill in the art will readily appreciate that the examples provided are not the only way to implement such methods and apparatus.

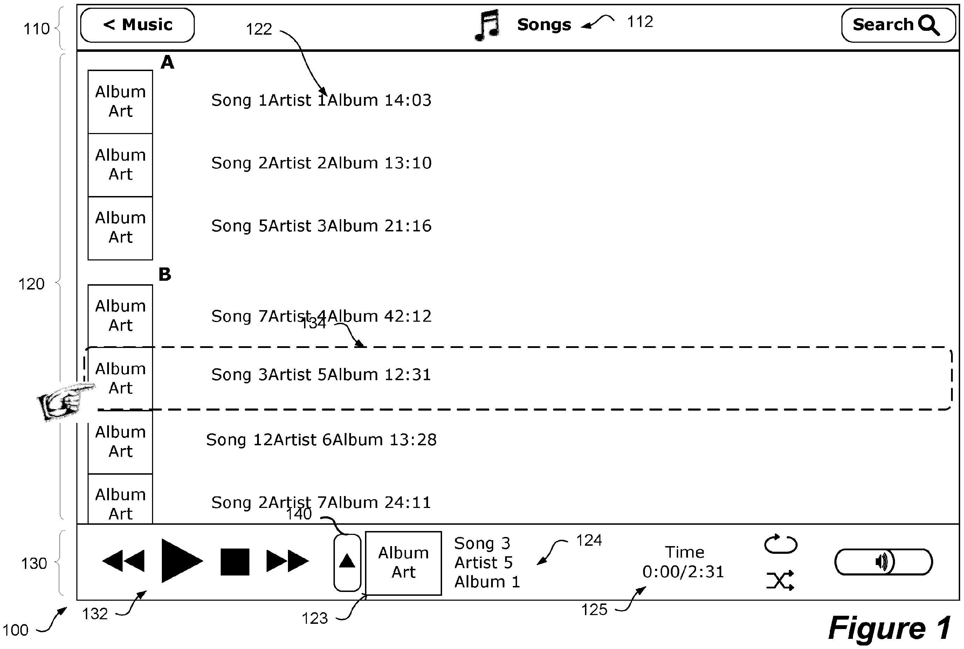

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein. Embodiments are described below, by way of example only, with reference to Figures 1-11.

The present disclosure allows a user to navigate (i.e..browse) freely in a media player while allowing the user to return to the context (e.g. a playlist or an album) in which a current song was selected with a single button press. Once there, the user can select a new media items such as a song or video if desired and can also return to the previous browse context with a single button press or gesture. The media player is executed on a computing device having at least a processor and a memory providing a graphical user interface presented on a display to a user for selection of media items and the related metadata. The media player may be an independent application or integrated into the operating system of the device or integrated as part of one or more applications executed on the device. The media player may be capable of playing one or more types of media (also referred to as an asset or content) such as audio, video or text based media items provided in various formats.

Figure 1 shows a media player 100 interface having a status bar 110 and browsing section in a first browser display portion 120 providing a selection context in which the user may browse a media library to select media items 134 for playback. The media player 100, when playing media items, such as for example a song, provides a playback bar 130. In Figure 1 the playback bar 130 appears at the bottom of the display. The playback bar 130 enables control of the selected media item 134, or a media item that was in a queue for playback and is currently being played, and displays metadata information related to the selected media browse context 124. The playback bar 130 can provide controls 132 (play/pause, stop, rewind, fast forward) for playing the media item, a thumbnail 123 of associated album art, the song title, the artist, album title 124 and a play time / song length indicator 125 can also be displayed.

In this example the media library is being browsed by a Songs view 112 in the first browser display portion 120 and song information 122 is displayed alphabetically for selection by the user. In this example a song (media item) is selected by a user for playback and the associated metadata information for media 134 is shown in playback bar 130 relating to the selected song. While the current song is playing, the user can navigate within the media player 100 using, for example, category buttons to browse different views such as All Songs (shown in the upper portion of Figure 1), Albums, Genres, Artists, Playlist, etc. The selection context may be defined by the views that are applied to the media library or search criteria applied to the library and the results or listings that are presented to the user in relation to the media library for selection. The views that are available are associated with the type of media in the library to be played. For example video media may have views such as title, genre, actor, subject, type, size, date, length, etc. The views would be generated based upon the metadata associated with the media items, such as for example ID3 tags or embedded metadata such as provided in JPEG or MPEG based metadata, although other metadata formats are contemplated. The user may be browsing the library to select other songs for playback or to add to a playback queue or playlist.

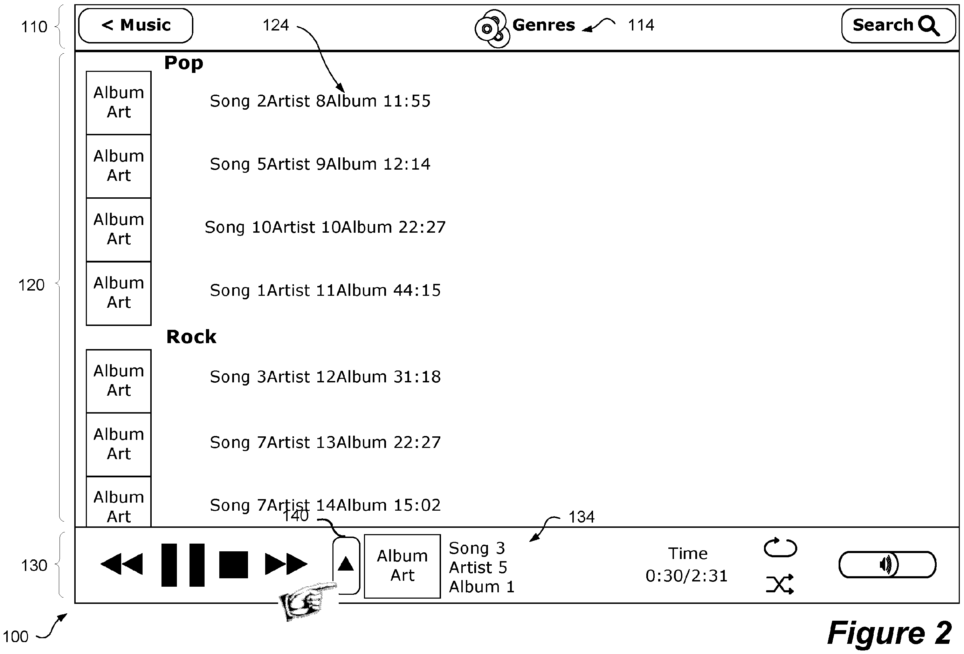

As shown in Figure 2, once initial song selections have been made and a current song is playing, the user is free to navigate to a different section of the library, for example to a Genre view 114, which can be presented in the first browser display portion 120 listing of songs based on the associated genres, in this example Pop and Rock genres. In the playback bar 130 a selection context display input is provided by a navigation button 140, as shown, that provides a shortcut to the context in which the current song was previously selected. The navigation button 140 is illustrated in Figure 2 as a rectangular button containing an upward pointing triangle that is positioned to the left of the album art thumbnail in the control bar. The selection context display input 140 may alternatively be presented anywhere within the media player or be a similar function actuated by a predefined gesture, such as a swipe, performed by a users on the graphical user interface. When the user presses the navigation button 140, the user is taken directly to the context in which the current song was selected.

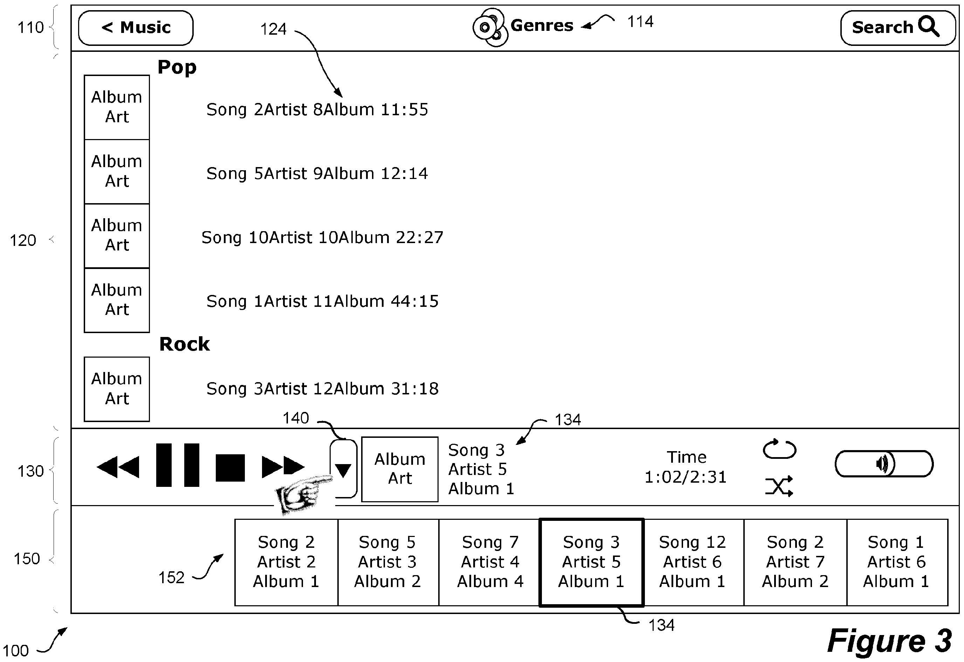

As shown in Figure 3, when the navigation button 140 is pressed a media selection portion in a second display portion 150 may be shown below the playback bar 130 providing selection context ribbon 152 for the currently playing song (media item). That is, the song selection context that was presented in the first browser display portion 120 identifying song information 122, at the time of selection to the playback queue or playlist of the currently playing song, is displayed. This enables the user to go back to the same selection context and select another song for playback. Although the context ribbon 152 is shown below the playback bar 130 the context ribbon 152 can be presented or oriented in any number of positions within the media player 100 or maybe presented directly in the first browser display portion 120. The user may then browse through the initial selection of songs related to the currently playing song.

Although, a navigation button 140 is shown the same selection display context input functionality may be performed by other means, for example a gesture input into the media player 100 such as a swipe to a touch sensitive display of the device. In addition, the selection context maybe adjusted based upon the currently playing media associated with the originally selected media item, for example in a Playlist the context ribbon can be positioned around the currently playing media item in relation to the original media item selection.

The selection context is shown in Figure 3 as a context ribbon 152 of thumbnails across the bottom of the display (the control bar is translated upward to make room for the context ribbon). Although the selection context is provided in the context ribbon 152 format, it may be presented in any number of forms based upon the configuration of the media player 100 such as a list, icons, thumbnails, details or tiles for selection. In this example the selection context can be any of a Playlist, or a list of All Songs, Albums, Artists, etc. The selection context ribbon 152 in this example is scrollable left-to-right if needed. The user can make a new current song selection directly from the selection context ribbon thumbnails, thus changing or adding to the currently queue or playlist. The selection context ribbon 152 may only show a portion of the media files that were presented in the original selection context 122 based upon space allocated within the display, however the user may be able to access all of the content present in the initial selection context (e.g. by scrolling). Although the selection context portion 150 in this example is shown below the playback bar 130, the selection context portion 150 may be displayed in any number of alternative positions in the media player, and may present the selection context in a list, thumbnail or other common media library display formats.

The browse context 124 in the music player (e.g. the state of the music player before the navigation button is pressed) is maintained in the upper portion of the display while the selection context ribbon 150 is displayed. The navigation button 140 is modified to have a downward pointing triangle while the selection context ribbon 152 is displayed. The user can return to the browse context 124 in the media player 100 by pressing the navigation button 140 again.

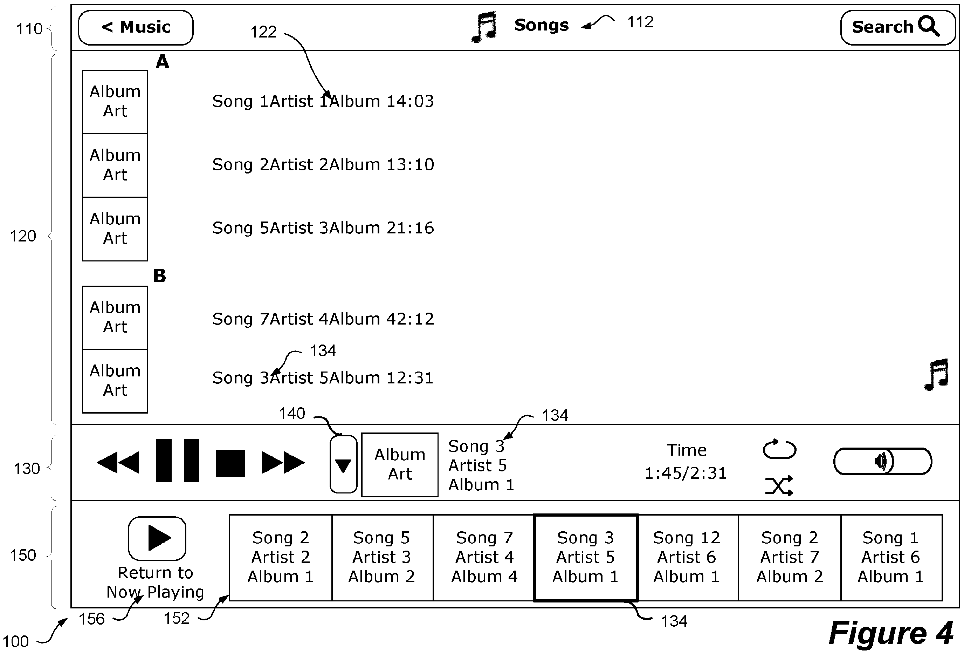

Alternatively, another icon or button may be provided, for example a Return to Now Playing button 156 in the selection context ribbon 152 as shown in Figure 4 , which when pressed or selected, changes the first browser display portion 120 to the initial media selection context 122. In the first browser display portion 120 the currently playing media item 134 is also visible and may be highlighted or presented with an icon denoting that is the current selection that is being played. The browse context 124 that was previously presented may be stored to enable the user to return to the last browse context 124 after viewing the selection context for the current song. The action may be performed by actuation of the navigation input 140 or button 156 or a gesture input.

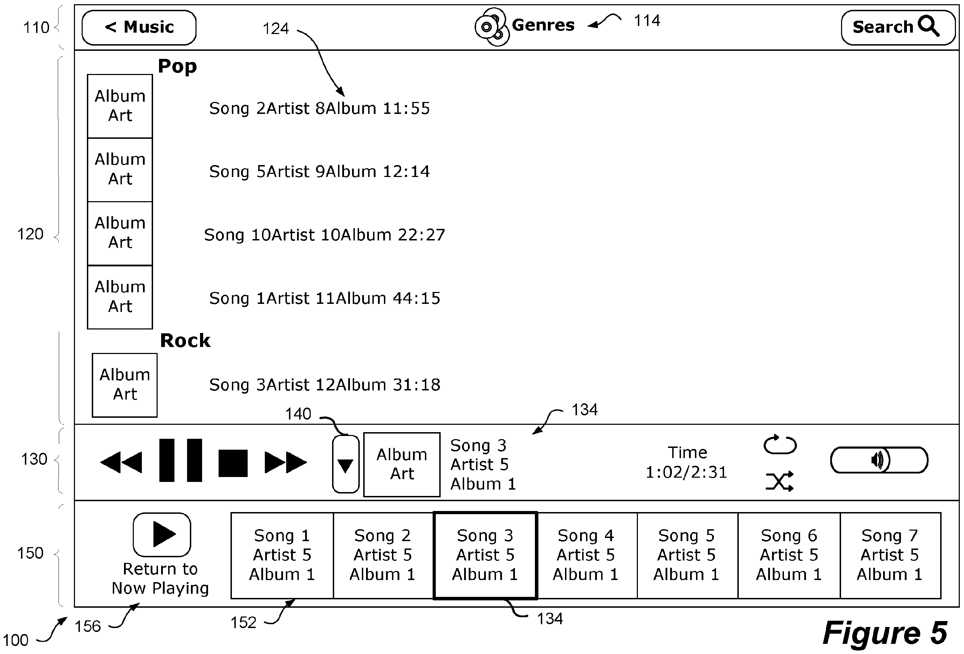

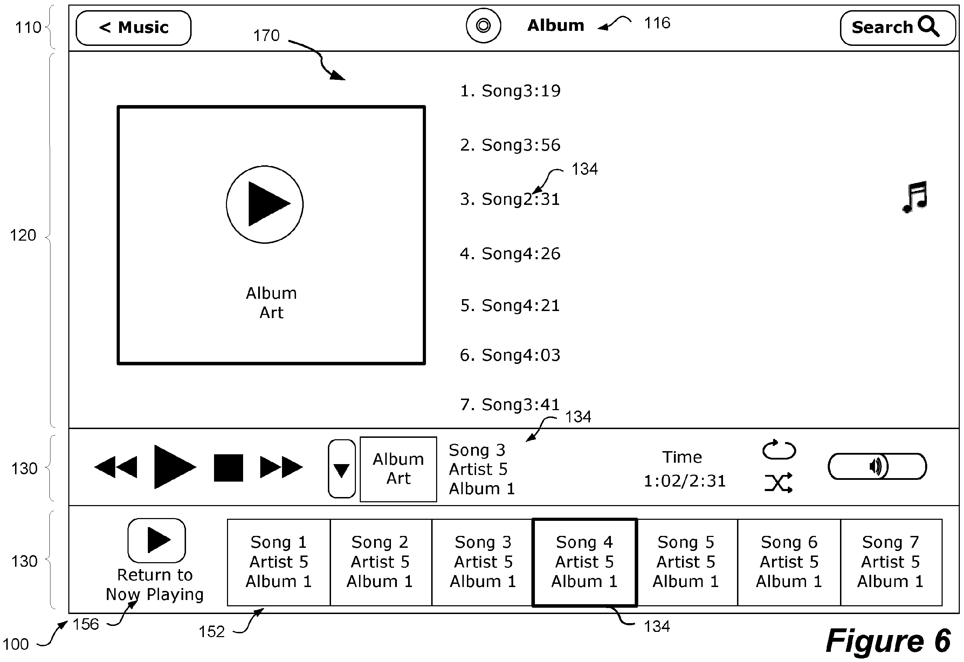

In Figure 5, an alternate display is shown where the selection navigation context in the second display portion 150 includes a context ribbon 152 showing songs related to an album selection or a song from an album selection for playback. In the first portion 120 the user has browsed to the genre view 114 after an album selection context was made and playback of the songs has commenced. In this example, when the navigation display context input such as the Return to Now Playing button 156 or navigation button 140 is selected, the browsing portion 120 switches to the associated initial context selection of albums 116 and may display the album selection context 170 showing for example, the cover art and associated song list of the originally selected album as shown in Figure 6.

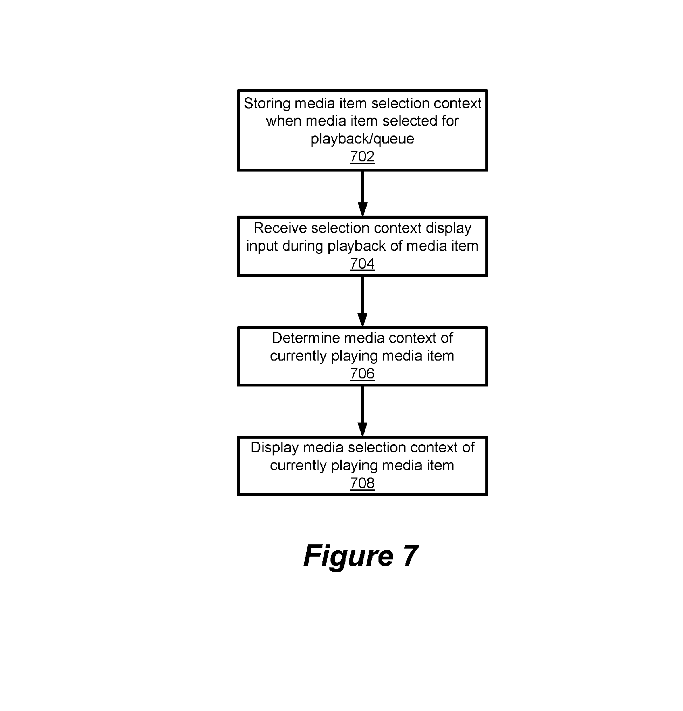

Figure 7 shows a flowchart of a method of media player navigation. The method commences with storing the media selection context (702) each piece of media was selected for playback in. This may be for example a media library view from which the media was accessed. The media library view may be any type of organization view such as title, genre, icons, details, lists, playlists or searches in which media can be selected. The view can be generated based upon metadata associated with the media type. Each selection context for individual media is stored, such as during the creation of a playlist where individual songs are added to the list. Once playback of the media has commenced, additional browsing input may be received from the user browsing the media library during playback. The subsequent browsing context may be based on the original media selection context as a starting point or based upon a new context such as a new category or search criteria. During playback of the media a selection context display input is received (704) through the user interface which can be provided by the navigation button 140 or other types of input such as gestures through a touch interface received by the media player. The selection context of the currently playing media is determined (706) from the stored media selection context information. The selection context of the currently playing media can then be displayed (708) allowing the user to navigate to other media within the same context. It should be noted that browsing or searching functions may not be limited to a single media library but may encompass multiple libraries stored locally or remotely. The selection context may therefore include information to identify multiple media libraries and the information that was provided from the libraries at the time of selection of a particular media item. The selection context information may by appended to media item metadata or stored as part of queue information or playlist information, or as a separate metadata file.

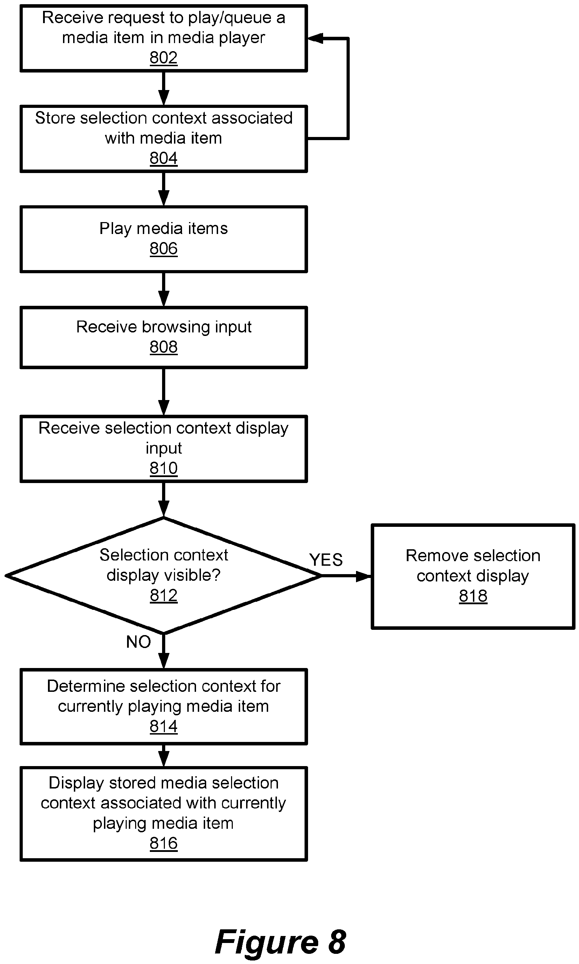

Figure 8 is a flow chart providing an alternate method of media player navigation. A request to play a media selection in a media player is received (802). The selection context of the media to be played is stored (804) individually for each media selected to be played in a playback queue or in a playlist. The selected media is then played (806) by the media player. The playback of the selected media may not necessarily be played sequentially in the order each item of media was selected buy may be played based upon preferences selected in the player such as random order playback, sorting of one or more metadata fields associated with the media files such as title, artist, time, album etc. Once playback of the selected media item in the queue, or playlist, has commenced, additional browsing input may be received (808) from the user browsing the media library during playback. The subsequent browsing context may be based on the an selection context of the last media item added to the queue or playlist as a starting point or based upon a new context such as a new category or search criteria. During playback of the media item a selection context display input (810) is received through an input that can be provided by the navigation button 140 or other types input such as gestures received by the media player. If the selection context is not displayed (NO at 812), the selection context of the currently playing media item is determined (814) from the stored selection context and displayed (816) within the media player. If the selection context is displayed (YES at 812) the selection context display can be removed (818).

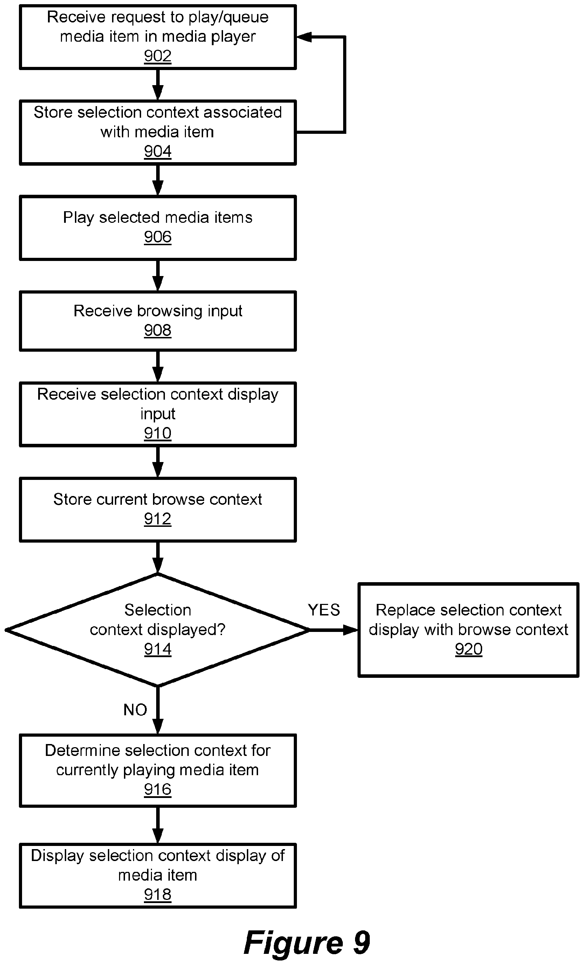

Figure 9 is a flow chart providing an alternate method of media player navigation. A request is received by the media player to play a media item selection (902) by adding it to a playback queue or playlist. The selection context associated with the individually selected media item is stored (904). The selected media item can then be played by the media player (906). Once playback of the selected media item has commenced, additional browsing input (908) may be received from the user browsing the media library during playback. The user may browse the media library either based on the original media selection, or commence browsing the media library based upon a new context such as a new category or search criteria to add or create to the queue or playlist. During playback of the media items that are in the playback queue a selection input (910) is received which can be provided by the navigation button 140 or other types of input such as gestures received by the media player. The current browse context is determined and stored (912). If the selection context display is not already displayed (NO at 914), the selection context display for the currently playing media item can then be determined (916) and displayed in a portion of the media player (918). If the selection context display is already displayed (YES at 914) the selection context display can be a replaced with the stored browse context (920). In this example the navigation input acts as a toggle between the selection context and the browse context being displayed. In a simplified embodiment if only one context window is presented in the media player, the toggling of the selection context input may replace the current browse context with the selection context without the display of a second display portion within the media player.

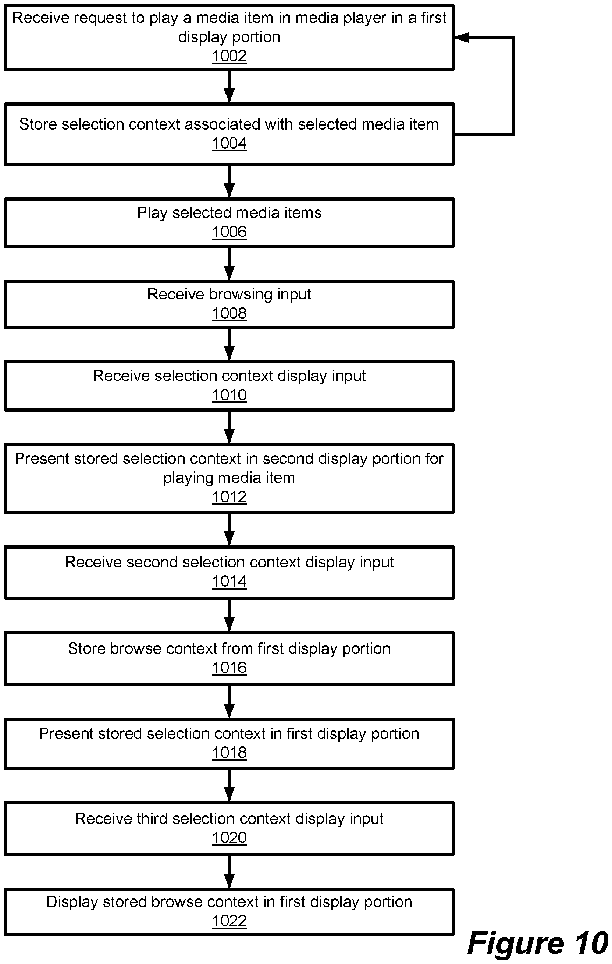

Figure 10 is a flow chart providing an alternate method of media player navigation. A request is received by the media player to play a media item in a first display portion of the media player (1002). The selection context associated with the media item is stored (1004). The selection context defines the particular view of the media library in which the media item was selected to be played or queued to a currently playback queue or to a playlist. If multiple items are to be selected the process is repeated for each media item, or groups of media items if they are for example in the same folder. The selected media items can then be played by the media player (1006). Once playback of the selected media item has commenced, additional browsing input (1008) may be received from the user browsing the media library during playback. The additional browsing input may navigate to different media items or views of the media library, or to another media library. The subsequent browsing context may be based on the original media item selection context as a starting point or based upon a new context such as a new category or search criteria. During playback of the media items in the playback queue a selection context input (1010) is received from interaction of the user with the interface of the media player. The stored selection context for the currently playing media item is presented in a second display portion 150 (1012), for example below a playback bar or in a display window. A second, or subsequent selection context display input is received (1014), for example by a toggle by another press of navigation button, a gesture or another dedicated button. The current browse context, for example as presented in a first portion 120 of the display, is determined and stored (1016). The stored selection context in then displayed in the first display portion 120 (1018) replacing the current browse context presented in the second display portion 150. When a third selection context display input, or subsequent input, is received (1020), either by toggle by another press of navigation button, a gesture or another dedicated button, the stored browse navigation context is then be presented in first display portion 150 (1022) returning the media player to the previous browse state. In this manner the user can switch between actively browsing a media library during playback of a media item, view the context in which the current media item playing was selected, and switch back to the browse context seamlessly.

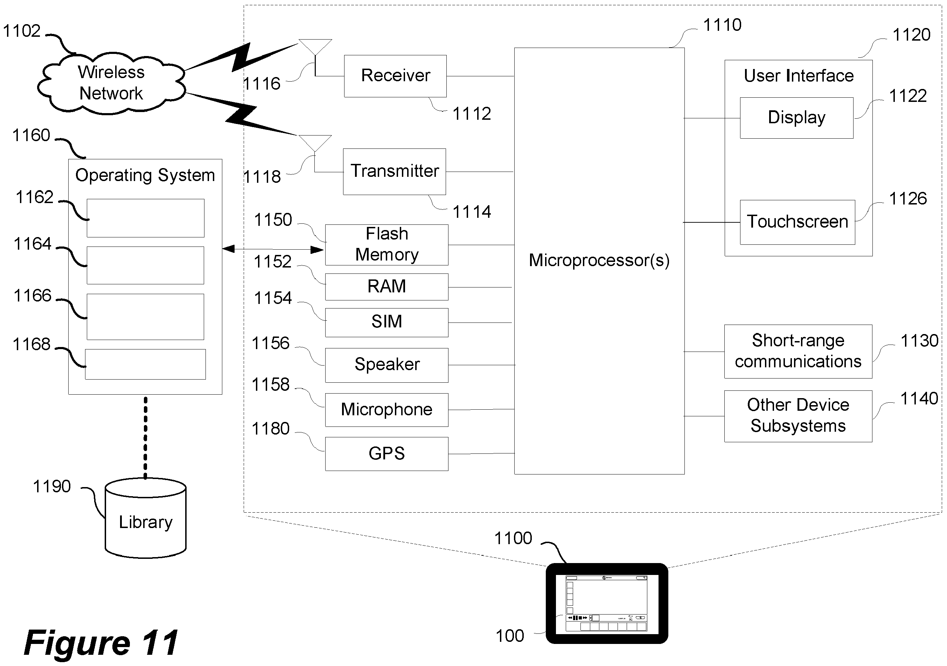

Figure 11 is a schematic depiction of an example device that a media player may be implemented on. As shown by way of example in Figure 11, the mobile device 1100, such as but not limited to a tablet or smart phone, includes a processor (or microprocessor) 1110 for executing one or more applications, memory in the form of flash memory 1150 and RAM 1152 (or any equivalent memory devices) for storing the one or more applications and related data, and a user interface 1120 with which the user interacts with the device. The user interface 1120 may include a display 1122 and a touch screen 1126.

Those skilled in the art will understand that references in this specification to 'during playback of the selected media item' and other similar references to media playback are not limited to the playback of an original selected media item but can also include the playback of other media items from the selection context that playback as a consequence of the selection of the original selected item. The media player can, for example, play each of the media items in a selection context (e.g. a playlist or album) in sequence commencing playback of a next item when a previous item has completed playback.

As shown by way of example in Figure 11, the mobile device 1100 may include a radiofrequency (RF) transceiver comprising a receiver 1112 and associated receiver antenna 1116 and transmitter 1114 and associated transmitter antenna 1118. The RF transceiver for communication with a wireless network 1102 using a wireless communication protocols such as, for example but not limited to, GSM, UMTS, LTE, HSPDA, CDMA, W-CDMA, Wi-Fi, Wi-MAX etc. A subscriber identify module (SIM) card 1154 may be provided. Optionally, where the device is a voice-enabled communications device such as, for example, a tablet, Smartphone or cell phone, the device would further include a microphone 1158 and a speaker 1156. Short-range communications is provided through wireless technologies such as Bluetooth™ or wired Universal Serial Bus™ connections to other peripheries or computing devices or by other device sub-systems 1140. This device may optionally include a Global Positioning System (GPS) receiver chipset 1180 or other location-determining subsystem.

The mobile device 1100 also includes an operating system 1160 and software components 1162 to 1168 which are described in more detail below. The operating system 1160 and the software components 1162 to 1168 that are executed by the microprocessor 1110 are typically stored in a persistent store such as the flash memory 1150, which may alternatively be a read-only memory (ROM) or similar storage element (not shown). Those skilled in the art will appreciate that portions of the operating system 1160 and the software components 1162 to 1168, such as specific device applications, or parts thereof, may be temporarily loaded into a volatile store such as the RAM 1152. Other software components can also be included, as is well known to those skilled in the art.

The subset of software applications that control basic device operations, including data and voice communication applications, may be installed on the mobile device 1100 during its manufacture. Other software applications include a message application 1162 that can be any suitable software program that allows a user of the mobile device 1100 to send and receive electronic messages. The software applications can further comprise a device state module 1166, a media player 1168, and other suitable modules (not shown). The device state module 1166 provides persistence, i.e. the device state module 1166 ensures that device data is stored in persistent memory, such as the flash memory 1150, so that the data is not lost when the mobile device 1100 is turned off or loses power. The media player 1168 includes functionality for playing media items such as audio or video media or electronic book media retrieved from a media library 1190 that may be resident on the device or remotely accessed through a network.

Some examples of other software components 1164 that may be executed by the operating system 1160 may include, peer-to-peer or instant messaging application, social networking, mapping, Internet browser, calendar, address book and phone applications It will be appreciated that the various applications may operate independently or may utilize features of other applications. For example, the phone application and messaging application may use the address book for contact details.

Although certain methods, apparatus, and articles of manufacture have been described herein, the scope of coverage of this patent is not limited thereto. To the contrary, this patent covers all methods, apparatus, computer readable memory, and articles of manufacture fairly falling within the scope of the appended claims either literally or under the doctrine of equivalents.

## Claims

1. A method of media player navigation, the media player (100) provided in a device (1100), the method comprising:
storing (702) in memory a selection context in which each of a plurality of
media items to be played by the media player was selected for playback;
receiving (704) a selection context display input during playback of one of
the plurality of media items;
determining (706) the media selection context associated with the one of the
plurality of media items currently being played in the media player; and
displaying (708) the determined media selection context in response to the
received selection context display input.

2. The method of claim 1 wherein storing the respective selection context is associated with each of the plurality of media items added to a queue or a playlist.

3. The method of any one of claims 1 or 2 wherein the selection context display input is a button displayed in a graphical user interface.

4. The method of any one of claims 1 or 2 wherein the selection context display input is an icon wherein an orientation of the icon indicates when the selection context is presented.

5. The method of any one of claims 1 or 2 wherein the selection context display input is provided by a gesture input through a touch interface of the device.

6. The method of any one of claims 1 to 5 wherein a browse context is presented in a first display portion during playback of the selected plurality of media items and the determined selection context is displayed in a second display portion within the media player.

7. The method of claim 6 further comprising:
receiving a second selection context display input;
storing a current browse context from the first display portion; and
presenting the stored selection context in the first display portion replacing
the browse context.

8. The method of claim 7 further comprising:
receiving a third selection context display input; and
replacing the selection context in the first display portion with the stored
browse context.

9. The method of claim 7 wherein when the selection context display is already presented, when a subsequent selection context display input is received the displayed selection context is replaced with the stored browse context.

10. The method of claim 6 wherein the second portion is presented in a ribbon format comprising thumbnails associated with in the media items in the determined selection context.

11. The method of any one of claims 1 to 10 wherein the selection context is defined by views that are applied to a media library or search criteria applied to the media library and results are presented to a user in relation to the media library for selection of media items for playback.

12. The method of any one of claims 1 to 11 wherein the selection context is stored in relation to the metadata associated with the media items.

13. The method of claim 12 wherein the selection context is presented based upon metadata associated with the media items selected from the group comprising: playlist, artist, album, genre, song titles, actor, subject, type, size, date, time and length.

14. An apparatus (1100) for executing a media player (100), the apparatus comprising:
a display (1122);
a processor (1100) coupled to the display;
a memory (1150) containing instructions for navigating and playing media in
the media player, the instructions when executed by the processor providing the method of claims 1 to 13.

15. A computer readable memory containing instructions which when executed by a processor perform the method claims 1 to 13
